# DEMANDE DE BREVET EUROPEEN

(11) **EP 2 574 854 A1**
(43) Date de publication de la demande: **03.04.2013**
(21) Numéro de dépôt: 12186335.1
(22) Date de dépôt: 27.09.2012
(51) Int. Cl.: F24D 13/04, F24D 19/10, F24H 3/00, F24H 3/02, F24H 3/12, F24H 9/20

(54) **Dispositif de chauffage ventilo-convecteur et installation de chauffage comprenant un tel dispositif**

(30) Priorité: 28.09.2011 FR 1158710
(71) Demandeur: Atlantic Industrie, 85000 La Roche sur Yon (FR)
(72) Inventeur: Brot, Roland, 85000 Mouilleron Le Captif (FR); Gatel, Guillaume, 35770 Vern sur seiche (FR); Lefebvre, Sylvain, 86100 Chatellerault (FR)
(74) Mandataire: Hirsch & Associés

(57) **Abrégé**

L'invention se rapporte à un dispositif de chauffage ventilo-convecteur (10) comprenant un élément électrique (22) chauffant une façade (24) du dispositif (10) pour émettre de la chaleur par rayonnement.

L'invention vise également une installation de chauffage comprenant un générateur de chauffage central pour chauffer un fluide, au moins un dispositif de chauffage ventilo-convecteur, et un circuit d'alimentation en fluide reliant le au moins un dispositif de chauffage ventilo-convecteur (10) au générateur de chauffage central.

## Description

La présente invention concerne un dispositif de chauffage ventilo-convecteur et une installation de chauffage comprenant un tel dispositif.

Un dispositif de chauffage ventilo-convecteur est connu. Il comprend classiquement un échangeur thermique entre un fluide chaud qui le parcourt et de l'air brassé au moyen d'un ventilateur présent dans le dispositif de chauffage ventilo-convecteur. L'air, chauffé au contact de l'échangeur thermique, est ensuite envoyé soufflé dans la pièce à chauffer.

Il est également connu une installation de chauffage comprenant une pluralité de tels dispositifs de chauffage ventilo-convecteurs alimentés en fluide chaud par un générateur de chauffage central adapté à chauffer le fluide alimentant les différents dispositifs de chauffage ventilo-convecteurs.

En outre, le confort procuré par les dispositifs de chauffage ventilo-convecteurs ne satisfait pas toujours les utilisateurs.

Le but de la présente invention est de fournir un dispositif de chauffage ventilo-convecteur et une installation de chauffage comprenant un tel dispositif de chauffage ventilo-convecteur ne présentant pas les inconvénients précités. Notamment, l'invention vise à fournir un dispositif de chauffage ventilo-convecteur et une installation de chauffage comprenant un tel dispositif de chauffage ventilo-convecteur présentant un confort amélioré par rapport aux dispositifs connus et présentant un meilleur rendement énergétique.

A cette fin, la présente invention propose un dispositif de chauffage ventilo-convecteur comprenant un élément électrique chauffant une façade du dispositif pour émettre de la chaleur par rayonnement.

Suivant des modes de réalisation préférés, l'invention comprend une ou plusieurs des caractéristiques suivantes :
- l'élément électrique chauffant la façade est disposé à proximité de la façade, de préférence, est fixé sur la façade ;
- l'élément électrique chauffant la façade comprend un film résistif appliqué sur la façade ;
- l'élément électrique chauffant la façade comprend un câble résistif disposé entre deux feuilles en matériau conducteur thermique ;
- le dispositif de chauffage ventilo-convecteur comprend en outre une alimentation en fluide chaud, un ventilateur pour brasser de l'air, et un échangeur thermique entre l'air brassé et le fluide chaud, l'échangeur thermique présentant de préférence des ailettes ;
- le dispositif de chauffage ventilo-convecteur comprend en outre un capteur de détection de présence d'individus et une unité électronique de commande adaptée à moduler le fonctionnement du dispositif de chauffage ventilo-convecteur en fonction de la détection de présence d'individus par le capteur de détection de présence d'individus ;
- le capteur de détection de présence d'individus comprend au moins l'un des éléments suivants :
   - une caméra,
   - un capteur de mouvement, et
   - un capteur de luminosité ;
- l'unité électronique de commande est adaptée à moduler au moins l'un parmi :
   - le fonctionnement de l'élément électrique chauffant la façade,
   - le débit d'air brassé par le ventilateur,
   - le débit de fluide chaud parcourant l'échangeur thermique, et
   - la température du fluide chaud parcourant l'échangeur thermique ;
- le dispositif de chauffage ventilo-convecteur comprend en outre une interface homme-machine permettant à un utilisateur de modifier le fonctionnement du dispositif de chauffage ventilo-convecteur, l'interface homme-machine étant de préférence en relation fonctionnelle avec l'unité électronique de commande ; et
- le dispositif de chauffage ventilo-convecteur comprend en outre une mémoire de stockage d'une programmation de fonctionnement du dispositif de chauffage ventilo-convecteur, laquelle programmation de fonctionnement est modifiable par auto-apprentissage en fonction de la détection de présence d'un individu réalisée par le capteur de détection de présence d'individus.

Selon un autre aspect, l'invention se rapporte à une installation de chauffage, comprenant :
- un générateur de chauffage central pour chauffer un fluide,
- au moins un dispositif de chauffage ventilo-convecteur tel que décrit ci-avant dans toutes ses combinaisons, et
- un circuit d'alimentation en fluide reliant le au moins un dispositif de chauffage ventilo-convecteur au générateur de chauffage central.

De préférence, l'installation comprend une pluralité de dispositifs de chauffage ventilo-convecteurs, au moins deux dispositifs de chauffage ventilo-convecteurs étant munis chacun d'un capteur de détection de présence d'individus distinct.

De manière préférée, l'unité électronique de commande et le capteur de détection de présence d'individus de chaque dispositif de chauffage ventilo-convecteur agissent indépendamment du fonctionnement des autres dispositifs de chauffage ventilo-convecteurs de l'installation de chauffage et/ou du générateur de chauffage central.

De préférence, le fluide chauffé par le générateur de chauffage central est l'un parmi :
- de l'eau,
- un gaz frigorigène, notamment du type R410a....

D'autres caractéristiques et avantages de l'invention apparaîtront à la lecture de la description qui suit d'un mode de réalisation préféré de l'invention, donnée à titre d'exemple et en référence au dessin annexé.

La figure 1 représente schématiquement un exemple de dispositif de chauffage ventilo-convecteur.

La figure 2 représente schématiquement un exemple d'installation de chauffage incluant une pluralité de dispositifs de chauffage ventilo-convecteurs du type illustrés à la figure 1.

L'invention se rapporte ainsi à dispositif de chauffage ventilo-convecteur comprenant un élément électrique chauffant une façade du dispositif pour émettre de la chaleur par rayonnement.

Un tel chauffage par rayonnement procure un confort accru aux utilisateurs par rapport aux dispositifs de chauffage ventilo-convecteur connus. En outre, l'utilisation d'un élément chauffant électrique, indépendant de l'alimentation en fluide chaud du dispositif de chauffage ventilo-convecteur, permet d'adapter le chauffage dans chacune des pièces d'une maison indépendamment les unes des autres. Au contraire, dans le cas d'une installation comprenant une pluralité de dispositifs de chauffage ventilo-convecteurs connus, alimentés par un même générateur de chauffage central, tous les dispositifs reçoivent du fluide sensiblement à la même température. Par suite, la modification de la température du fluide d'alimentation pour un dispositif de chauffage, impacte directement les autres dispositifs de chauffage ventilo-convecteurs de l'installation.

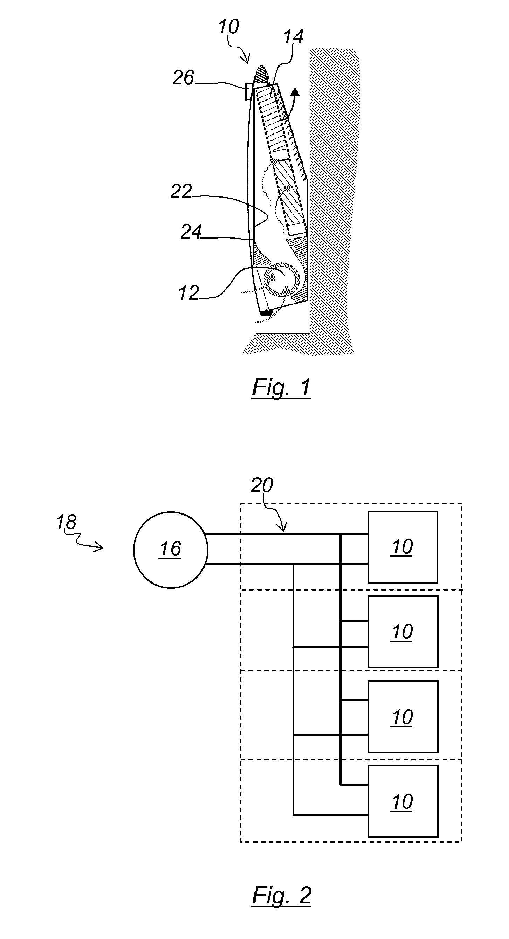

La figure 1 illustre un dispositif de chauffage ventilo-convecteur 10 selon l'invention.

Le dispositif de chauffage ventilo-convecteur 10 comprend un ventilateur 12 pour brasser de l'air et un échangeur thermique 14 entre l'air brassé et du fluide chaud. L'échangeur thermique 14 présente de préférence des ailettes pour augmenter la surface d'échange entre l'échangeur thermique 14 et l'air brassé. L'échangeur thermique 14 peut notamment prendre la forme d'un tube. Il peut notamment être réalisé en cuivre ou en aluminium.

L'échangeur thermique 14 est parcouru par un fluide chaud provenant, via une entrée d'alimentation du dispositif de chauffage ventilo-convecteur (ou alimentation), d'un générateur de chauffage central 16 pour chauffer un fluide d'une installation de chauffage 18 représentée sur la figure 2.

Le générateur de chauffage central peut notamment être une pompe à chaleur ou une chaudière, notamment une chaudière à condensation. Ces générateurs présentent en effet de très bons rendements énergétiques.

Une telle installation comporte, outre le générateur de chauffage central 16, une pluralité de dispositifs de chauffage ventilo-convecteurs 10 disposés dans une pluralité de pièces d'une maison ou d'un appartement et alimentés en fluide chaud par un circuit commun 20. Le fluide chaud peut notamment être de l'eau ou un fluide frigorigène.

Dans le cas où le fluide est un fluide frigorigène, notamment un gaz frigorigène, comme par exemple du R410A ou un gaz du même type, il est particulièrement intéressant que le générateur 16 soit une pompe à chaleur à géothermie. Dans ce cas, en effet, il est possible de n'avoir qu'un seul circuit de fluide frigorigène, le même fluide circulant dans le réseau extérieur à la pompe à chaleur (celui qui capte l'énergie géothermique) et dans les dispositifs de chauffage ventilo-convecteurs. La pompe à chaleur est alors de structure plus simple et est plus économique.

De manière remarquable, le dispositif de chauffage ventilo-convecteur 10 comporte un élément électrique 22 chauffant la façade 24 du dispositif 10 pour émettre de la chaleur par rayonnement.

L'élément électrique chauffant 22 est situé à proximité de la façade 24. Notamment, l'élément électrique chauffant 22 peut être fixé sur une plaque disposée à proximité - c'est-à-dire à une distance inférieure à 5 cm, de préférence inférieure à 1 cm - de la façade 24, à l'intérieur du dispositif de chauffage ventilo-convecteur 10. De préférence encore, l'élément électrique chauffant 22 est fixé directement au dos de la façade 24.

L'élément électrique chauffant peut prendre la forme d'un film résistif appliqué sur la façade ou sur la plaque disposée à proximité de la façade. L'élément électrique chauffant peut également comprendre un câble résistif disposé, en sandwich, entre deux feuilles en matériau conducteur thermique, comme de l'aluminium par exemple. Les feuilles peuvent être adhésives pour assurer le maintien en position du câble. L'ensemble des deux feuilles en matériau conducteur thermique et du câble résistif peut être directement fixé au dos de la façade.

De manière avantageuse, le dispositif de chauffage ventilo-convecteur 10 comprend en outre un capteur 26 de détection de présence d'individus et une unité électronique de commande (non représentée) adaptée à moduler le fonctionnement du dispositif de chauffage ventilo-convecteur en fonction de la détection de présence d'individus par le capteur de détection de présence d'individus.

Ainsi, il est possible d'adapter automatiquement le chauffage au moyen du dispositif de chauffage ventilo-convecteur, en fonction de la présence effective d'utilisateurs dans la pièce chauffée par le dispositif de chauffage ventilo-convecteur. Ceci permet d'adapter la consommation énergétique de l'installation de chauffage centrale au besoin réel des utilisateurs.

La modulation de fonctionnement du dispositif de chauffage ventilo-convecteur peut notamment consister en une modulation :
- du débit de fluide chaud parcourant l'échangeur thermique, et/ou
- la température du fluide chaud parcourant l'échangeur thermique, et/ou
- de la vitesse de rotation du ventilateur - ce qui agit directement sur le débit d'air brassé, et/ou
- du fonctionnement de l'élément électrique chauffant, notamment de l'alimentation électrique de l'élément électrique chauffant.

Le capteur de détection de présence d'individus peut notamment comprendre au moins l'un des éléments suivants :
- une caméra,
- un capteur de mouvement, et
- un capteur de luminosité.

Le dispositif de chauffage ventilo-convecteur 10 peut également comporter une interface homme-machine permettant à un utilisateur de modifier le fonctionnement du dispositif de chauffage ventilo-convecteur, l'interface homme-machine étant de préférence en relation fonctionnelle avec l'unité électronique de commande. Ainsi, une seule unité électronique de commande est nécessaire pour le réglage par l'utilisateur et pour l'adaptation à la présence effective des utilisateurs dans la pièce.

Le dispositif de chauffage ventilo-convecteur 10 peut en coutre comprendre une mémoire de stockage d'une programmation de fonctionnement du dispositif de chauffage ventilo-convecteur, laquelle programmation de fonctionnement est modifiable par auto-apprentissage en fonction de la détection de présence d'un individu réalisée par le capteur de présence.

Ainsi, l'utilisateur n'a pas à programmer le dispositif de chauffage, ni à subir des périodes de chauffage lorsqu'il rentre dans une pièce. Le dispositif de chauffage s'adapte aux habitudes de l'utilisateur et peut préchauffer une pièce pour que celle-ci atteigne une température souhaitée à une heure où l'utilisateur est d'habitude présent dans cette pièce.

Il est à noter que les dispositifs de chauffage ventilo-convecteurs 10 de l'installation de chauffage centrale peuvent être munis d'un capteur commun à toute l'installation ou de capteurs distincts pour chaque dispositif de chauffage ventilo-convecteur 10.

Il est également à noter que l'unité électronique de commande et le capteur de détection de présence de chaque dispositif de chauffage ventilo-convecteur peuvent agir indépendamment du fonctionnement des autres dispositifs de chauffage ventilo-convecteurs de l'installation de chauffage et/ou du générateur de chauffage central.

Selon un autre aspect intéressant, il est décrit ici un dispositif de chauffage ventilo-convecteur - qu'il comporte ou non un élément électrique chauffant sa façade pour émettre de la chaleur par rayonnement - comprenant un capteur de détection de présence d'individus et une unité électronique de commande adaptée à moduler le fonctionnement du dispositif de chauffage ventilo-convecteur en fonction de la détection de présence d'individus par le capteur de détection de présence d'individus. Les détails de description du dispositif de chauffage ventilo-convecteur décrit ci-avant restent valables pour ce dispositif de chauffage ventilo-convecteur comprenant un capteur de détection de présence d'individus et une unité électronique de commande adaptée à moduler le fonctionnement du dispositif de chauffage ventilo-convecteur en fonction de la détection de présence d'individus par le capteur de détection de présence d'individus.

Bien entendu, la présente invention n'est pas limitée aux exemples et au mode de réalisation décrits et représentés, mais elle est susceptible de nombreuses variantes accessibles à l'homme de l'art.

## Revendications

1. Dispositif de chauffage ventilo-convecteur (10) comprenant un élément électrique (22) chauffant une façade (24) du dispositif (10) pour émettre de la chaleur par rayonnement.

2. Dispositif de chauffage ventilo-convecteur selon la revendication 1, dans lequel l'élément électrique (22) chauffant la façade (24) est disposé à proximité de la façade (24), de préférence, est fixé sur la façade (24).

3. Dispositif de chauffage ventilo-convecteur selon la revendication 2, dans lequel l'élément électrique (22) chauffant la façade (24) comprend un film résistif appliqué sur la façade (24).

4. Dispositif de chauffage ventilo-convecteur selon la revendication 2, dans lequel l'élément électrique (22) chauffant la façade (24) comprend un câble résistif disposé entre deux feuilles en matériau conducteur thermique.

5. Dispositif de chauffage ventilo-convecteur selon l'une quelconque des revendications précédentes, comprenant en outre une alimentation en fluide chaud, un ventilateur (12) pour brasser de l'air, et un échangeur thermique (14) entre l'air brassé et le fluide chaud, l'échangeur thermique (14) présentant de préférence des ailettes.

6. Dispositif de chauffage ventilo-convecteur selon l'une quelconque des revendications précédentes, comprenant en outre un capteur (26) de détection de présence d'individus et une unité électronique de commande adaptée à moduler le fonctionnement du dispositif de chauffage ventilo-convecteur (10) en fonction de la détection de présence d'individus par le capteur (26) de détection de présence d'individus.

7. Dispositif de chauffage ventilo-convecteur selon la revendication 6, dans lequel le capteur (26) de détection de présence d'individus comprend au moins l'un des éléments suivants :
- une caméra,
- un capteur de mouvement, et
- un capteur de luminosité.

8. Dispositif de chauffage ventilo-convecteur selon la revendication 6 ou 7, dans lequel l'unité électronique de commande est adaptée à moduler au moins l'un parmi :
- le fonctionnement de l'élément électrique (22) chauffant la façade (24),
- le débit d'air brassé par le ventilateur (12),
- le débit de fluide chaud parcourant l'échangeur thermique (14), et
- la température du fluide chaud parcourant l'échangeur thermique (14).

9. Dispositif de chauffage ventilo-convecteur selon l'une quelconque des revendications précédentes en combinaison avec la revendication 6, comprenant en outre une interface homme-machine permettant à un utilisateur de modifier le fonctionnement du dispositif de chauffage ventilo-convecteur, l'interface homme-machine étant de préférence en relation fonctionnelle avec l'unité électronique de commande.

10. Dispositif de chauffage ventilo-convecteur selon l'une quelconque des revendications précédentes en combinaison avec la revendication 6, comprenant en outre une mémoire de stockage d'une programmation de fonctionnement du dispositif de chauffage ventilo-convecteur, laquelle programmation de fonctionnement est modifiable par auto-apprentissage en fonction de la détection de présence d'un individu réalisée par le capteur (26) de détection de présence d'individus.

11. Installation de chauffage (18), comprenant :
- un générateur de chauffage central (16) pour chauffer un fluide,
- au moins un dispositif de chauffage ventilo-convecteur (10) selon l'une quelconque des revendications précédentes, et
- un circuit d'alimentation en fluide (20) reliant le au moins un dispositif de chauffage ventilo-convecteur (10) au générateur de chauffage central (16).

12. Installation de chauffage central selon la revendication 11, comprenant une pluralité de dispositifs de chauffage ventilo-convecteurs (10), dans laquelle au moins deux dispositifs de chauffage ventilo-convecteurs (10) sont munis chacun d'un capteur (26) de détection de présence d'individus distinct.

13. Installation de chauffage central selon la revendication 11 ou 12, dans laquelle l'unité électronique de commande et le capteur (26) de détection de présence d'individus de chaque dispositif de chauffage ventilo-convecteur (10) agissent indépendamment du fonctionnement des autres dispositifs de chauffage ventilo-convecteurs de l'installation de chauffage et/ou du générateur de chauffage central.

14. Installation de chauffage central selon l'une des revendications 11 à 13, dans lequel le fluide chauffé par le générateur de chauffage central est l'un parmi :
- de l'eau,
- un gaz frigorigène, notamment du type R410a.
